# EUROPEAN PATENT APPLICATION

(11) **EP 1 770 875 A1**
(43) Date of publication of application: **04.04.2007**
(21) Application number: 05752902.6
(22) Date of filing: 22.06.2005
(51) Int. Cl.: H04B 7/08, H01Q 1/24, H04B 1/40

(54) **MOBILE TELEPHONE DEVICE**

(30) Priority: 26.07.2004 JP 2004217673
(71) Applicant: MATSUSHITA ELECTRIC INDUSTRIAL CO., LTD., Osaka 571-8501 (JP)
(72) Inventor: YAMAZAKI, Yukari c/o Matsushita Electric Indust.Co, Chuo-ku, Osaka 540-6319 (JP); SAITO, Yutaka c/o Matsushita Electric Industrial, Chuo-ku, Osaka 540-6319 (JP); KOYANAGI, Yoshio c/o Matsushita Electric Indust, Chuo-ku, Osaka 540-6319 (JP); EGAWA, Kiyoshi c/o Matsushita Electric Industrial, Chuo-ku, Osaka 540-6319 (JP); SASAKI, Hiroyuki c/o Matsushita Electric Indust., Chuo-ku, Osaka 540-6319 (JP)
(74) Representative: Grünecker, Kinkeldey, Stockmair & Schwanhäusser Anwaltssozietät
(86) International application number: PCT/JP2005/011421
(87) International publication number: WO 2006/011322

(57) **Abstract**

There is disclosed a mobile telephone device capable of getting a high reception sensitivity whatever the use state is. In this device, a loop element (104) is arranged in the vicinity of a hinge unit (103) of an upper case (101). The loop element (104) is connected via a matching circuit (105) to a broadcast reception circuit (106). The device is configured so that a helical element (111) is selected in an earphone connector (109) when an earphone cable (108) is removed. A reception signal of the antenna selected by the earphone connector (109) is inputted to a broadcast reception circuit (110). Demodulation signal selection circuit (113) operates to select a demodulation signal having a higher signal quality outputted from the broadcast reception circuit (106) or the broadcast reception circuit (110).

## Description

### Technical Field

The present invention relates to a mobile telephone apparatus having a loop antenna element as a broadcast receiving antenna that has a broadcast receiving function.

### Background Art

As a mobile telephone apparatus provided with a television receiving function, an apparatus is known in which a dipole antenna is configured with a monopole antenna and battery and arranged vertically to a receiver (for example, see Patent Document 1).

Further, as this type of the mobile telephone apparatus, an apparatus is known in which two loop antennas are arranged orthogonally to each other and the polarized wave is switched according to usage states when the apparatus is attached to a human body (for example, see Patent Document 2).

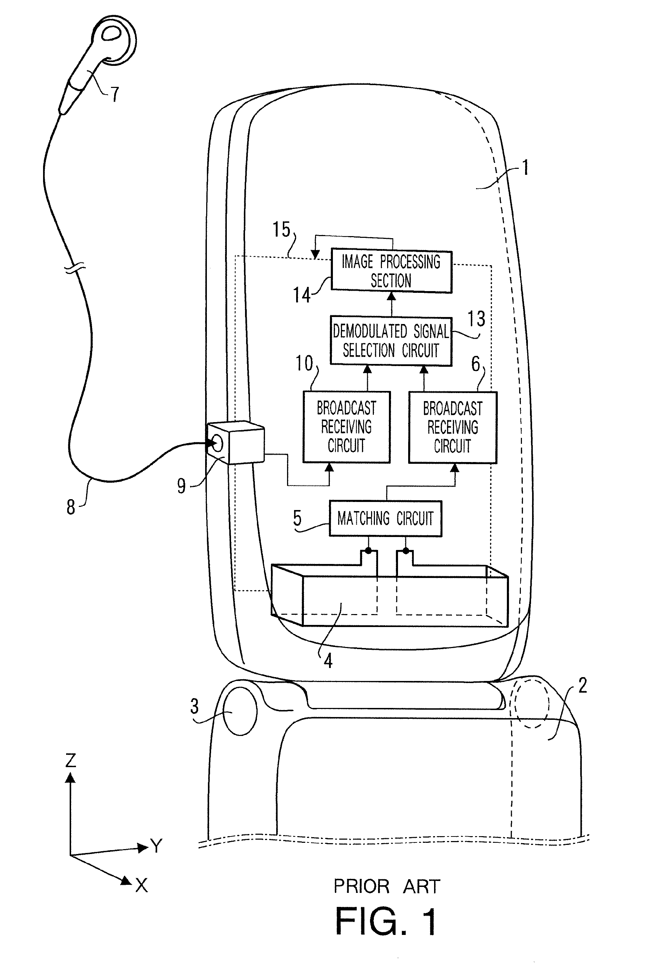

Still further, as this type of the mobile telephone apparatus, there is an apparatus in which an earphone cable antenna that operates in the electric field mode and a loop antenna that operates in the magnetic field mode are switched according to the reception level, and the diversity operation is performed. As shown in FIG.1, this type of mobile telephone apparatus has, for example, a foldable structure in which upper case 1 and lower case 2 are rotatably supported with hinge part 3.

In FIG.1, loop element 4 operates as a built-in antenna for receiving television broadcasting, and impedance matching is achieved by matching circuit 5. The signal received from matching circuit 5 is inputted to broadcast receiving circuit 6 which is a first receiving circuit for receiving a television broadcasting wave.

Earphone 7 is connected to earphone connector 9 through earphone cable 8. Earphone cable 8 operates as an external antenna that transmits a speech signal and receives a television broadcasting wave. The television broadcasting signal received by earphone cable 8 is inputted via earphone connector 9 to broadcast receiving circuit 10 which is a second receiving circuit for receiving a television broadcasting wave.

Demodulated signal selection circuit 13 is configured so as to select a higher quality signal between digital signals demodulated at broadcast receiving circuit 6 and broadcast receiving circuit 10. The demodulated signal outputted from demodulated signal selection circuit 13 is processed by image processing section 14, and image is displayed on display section 15 which is a liquid crystal display arranged on the surface of upper case 1, that is, on the surface of the -X side.
Patent Document 1: Japanese Patent Application Laid-Open No.2001-251131
Patent Document 2: Japanese PatentApplication Laid-Open No.HEI10-84209

### Disclosure of Invention

### Problems to be Solved by the Invention

However, in the receiving antenna of the mobile telephone apparatus disclosed in Patent Document 1, the main polarized wave is a vertically-polarized wave, and therefore there is a problem that it is not possible to increase the sensitivity for a horizontally-polarized wave, which is used dominantly as a television broadcasting wave.

With the receiving antenna of the mobile telephone apparatus disclosed in Patent Document 2, it is possible to switch the main polarized wave between two different directions, but there is a problem that the antenna is not considered to ensure the optimal antenna performance according to various usage states, in particular, the state that a user holds a mobile telephone with his/her hand, or that a mobile telephone is close to or away from a human body.

Moreover, with the receiving antenna of the mobile telephone apparatus shown in FIG.1 has a problem that, when an earphone is not used--when the user listens to sound using a loudspeaker without plugging the earphone--, only a loop antenna operates, so that it is not possible to obtain the diversity effect.

It is therefore an object of the present invention to provide a mobile telephone apparatus capable of obtaining high receiving sensitivity in any usage state.

### Means for Solving the Problem

A mobile telephone apparatus according to the present invention has: a broadcast receiving section that receives broadcasting; a first electric-field mode antenna element that is detachable to a body of the mobile telephone apparatus; a second electric-field mode antenna element that is disposed on the mobile telephone apparatus; a magnetic-field mode antenna element; and an antenna switching section that selectively switches between the antenna elements.

According to this configuration, the antenna elements can be selectively switched using the antenna switching section, so that it is possible to obtain high receiving sensitivity in various usage states.

### Advantageous Effect of the Invention

According to the present invention, in a state where, for example, television broadcasting is viewed, the diversity effect of the electric-field mode antenna and the magnetic-field mode antenna can be obtained regardless of whether or not the earphone is used, so that it is possible to always obtain high receiving sensitivity.

### Brief Description of Drawings

FIG. 1 is a schematic perspective view showing a basic configuration of a conventional mobile telephone apparatus;
FIG. 2 is a schematic perspective view showing a basic configuration of a mobile telephone apparatus according to Embodiment 1 of the present invention;
FIG.3 is a block diagram showing a configuration of the main part for illustrating the operation of the mobile telephone apparatus according to Embodiment 1 of the present invention;
FIG. 4 shows a state where a user is holding the mobile telephone apparatus according to Embodiment 1 of the present invention in his/her hand, and is viewing television broadcasting;
FIG.5 is a graph showing average gain of each antenna in the mobile telephone apparatus according to Embodiment 1 of the present invention;
FIG.6 is a schematic perspective view showing another basic configuration of the mobile telephone apparatus according to Embodiment 1 of the present invention;
FIG. 7 is a schematic perspective view showing a basic configuration of a mobile telephone apparatus according to Embodiment 2 of the present invention; and
FIG. 8 is a graph showing average gain of each antenna in the mobile telephone apparatus according to Embodiment 2 of the present invention.

### Best Mode for Carrying Out the Invention

Embodiments of the present invention will be described in detail below with reference to the accompanying drawings. Throughout the drawings, components that have the same configuration or function will be assigned the same reference numerals without further explanations.

### (Embodiment 1)

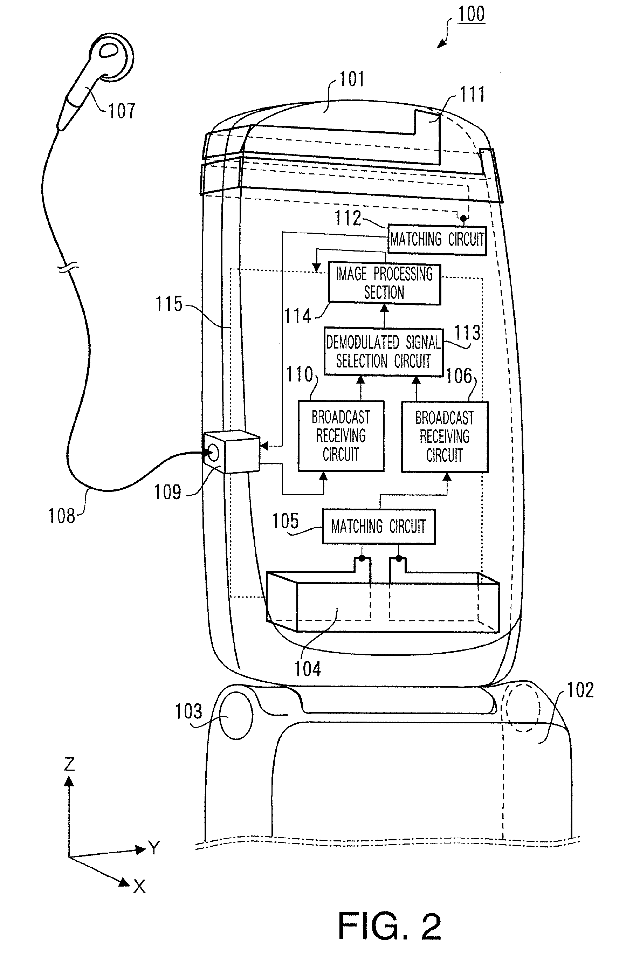

FIG.2 is a schematic perspective view showing a basic configuration of the mobile telephone apparatus according to Embodiment 1 of the present invention.

As shown in FIG.2, mobile telephone apparatus 100 according to Embodiment 1 is configured with a foldable mobile telephone apparatus in which upper case 101 and lower case 102 are pivotally supported at hinge part 103 allowing the foldable mobile telephone to open and close. Of course, the mobile telephone apparatus according to the present invention may be a straight type mobile telephone apparatus configured with a single case.

In FIG.2, upper case 101 and lower case 102 are made from molded insulating resin material. Loop element 104 as a loop antenna element is arranged near hinge part 103 of upper case 101 along the width direction (Y axis direction) of mobile telephone apparatus 100. Loop element 104 operates as a built-in television receiving antenna.

In loop element 104, impedance matching is achieved by matching circuit 105 in the range approximately from 470 MHz to 700 MHz which is a television broadcasting frequency. The signal received from matching circuit 105 is inputted to broadcast receiving circuit 106. Broadcast receiving circuit 106 is the first receiving circuit that receives a television broadcasting wave.

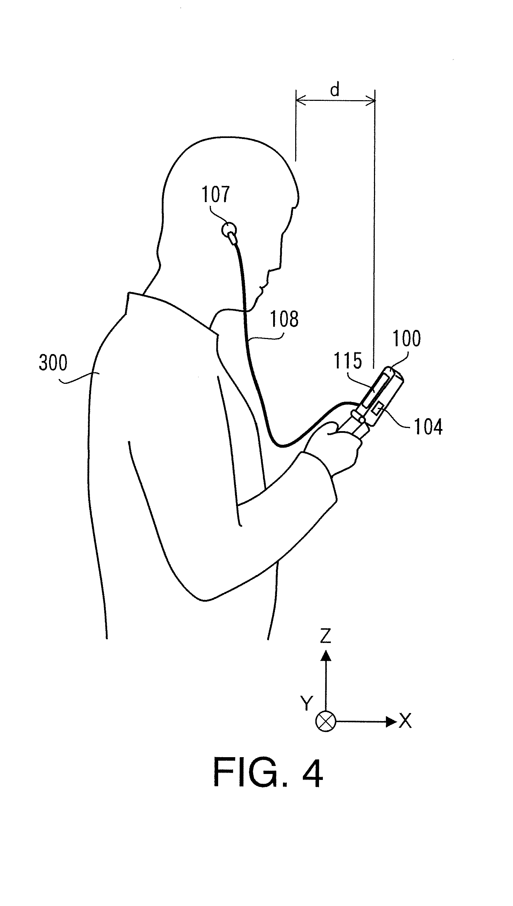

Earphone 107 is intended to be inserted into an ear of user 300 (see FIG.4) to allow the user to listen to sound of television broadcasting, and is connected to earphone connector 109 via earphone cable 108.

Earphone cable 108 transmits speech signals, and operates as an external antenna that receives a television broadcasting wave. The television broadcasting signal received by earphone cable 108 is inputted to broadcast receiving circuit 110 via earphone connector 109. Broadcast receiving circuit 110 is the second receiving circuit that receives a television broadcasting wave.

The length of earphone cable 108 is, for example, about 50 to 100 cm. In the television broadcast receiving band, this length of earphone cable 108 is about 0.8 to 2.3 wavelengths. It is possible for earphone cable 108 to have less than 0.8 wavelengths providing that the sufficient antenna performance for practical use can be obtained.

Helical element 111 that operates as a built-in antenna for receiving a television broadcasting wave is disposed at the top end of upper case 101. Helical element 111 is formed so that a conductive element is wrapped around the outer surface of upper case (case) 101 several times at the top end of upper case 101 with a predetermined element interval (for example, approximately 1 mm).

Helical element 111 thus configured operates as a normal mode helical antenna, and the axis of the helical is positioned in the longitudinal direction, that is, the Z axis direction of the mobile telephone.

Total length of the conductive element configuring helical element 111 is about 0.25 (1/4) wavelengths to 0.625 (5/8) wavelengths in the television broadcast receiving band.

Helical element 111 achieves impedance matching by matching circuit 112 in the range approximately from 470 MHz to 700 MHz which is a television broadcasting frequency. The television broadcasting signal received by helical element 111 is inputted to broadcast receiving circuit 110 via earphone connector 109.

Earphone connector 109 has a function of switching between a television broadcasting signal received by earphone cable 108 and a television broadcasting signal received by helical element 111, and inputting the signal to broadcast receiving circuit 110.

Demodulated signal selection circuit 113 operates so that a higher quality signal is always selected between digital signals demodulated at broadcast receiving circuit 106 and broadcast receiving circuit 110. In the selection of the demodulated signal, in order to detect the qualities of both signals, for example, the quality of the demodulated digital signal such as a bit error rate and packet error rate, electric field strength, and quality parameter of a baseband signal such as C/N ratio (carrier to noise ratio) and S/N ratio (signal to noise ratio), are used.

Further, it is preferable to select the demodulated signal in a time interval as short as possible such as the minimum slot unit (time interval less than several milliseconds (msec)) of the format of the digital broadcasting signal, and thereby it is possible to increase the diversity effect during high-speed movement. However, even if the switching is performed in a long time interval such as one second, it is possible to obtain the effect of the improvement of the antenna performance including the influence of a human body obtained by a difference between the electric field mode and the magnetic field mode.

The demodulated signal outputted from demodulated signal selection circuit 113 is processed by image processing section 114, and image is displayed on display section 115. Display section 115 is made up of a liquid crystal display, and is arranged on the surface of upper case 101, that is, on the surface of the -X side.

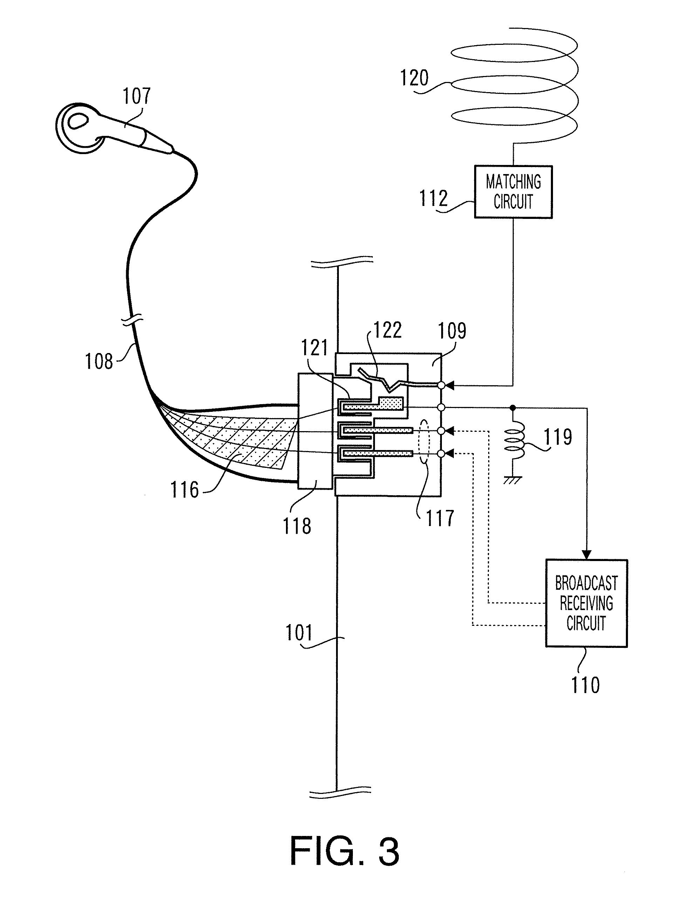

Next, a configuration for switching between earphone cable 108 and helical element 111 will be described using FIG.3. FIG.3 is a block diagram showing the configuration of the main part for illustrating the operation of the mobile telephone apparatus according to Embodiment 1 of the present invention.

In FIG. 3, external ground conductor 116 is made up of, for example, mesh-like conductive wires that cover speech signal line 117 so that the line is shielded, in earphone cable 108. External ground conductor 116 and speech signal line 117 are connected to earphone 107 in earphone cable 108.

Earphone cable 108 is connected to an internal circuit of mobile telephone apparatus 100 by inserting insertion connector 118 into earphone connector 109. External ground conductor 116 is connected to the ground inside mobile telephone apparatus 100--to the ground potential--with coil 119 via antenna connection terminal 121. By this means, speech signal line 117 is shielded with external ground conductor 116 in the low frequency band which is the speech signal band.

When earphone 107 is used, insertion connector 118 is inserted into earphone connector 109, and thereby external ground conductor 116 is connected to broadcast receiving circuit 110 via antenna connection terminal 121, and earphone cable 108 is selected as an antenna. When the earphone is used, a value of coil 119 is set so as to achieve sufficiently high impedance in the television broadcasting frequency band.

Helical element 120 in FIG.3 schematically shows helical element 111 shown in FIG.2. The television broadcasting signal received by helical element 120 reaches spring connection terminal 122 of earphone connector 109 through matching circuit 112.

Spring connection terminal 122 has springiness and is configured so as to be open when insertion connector 118 is inserted into earphone connector 109. When insertion connector 118 is removed from earphone connector 109, spring connection terminal 122 is shorted with antenna connection terminal 121, and helical element 120 is selected as an antenna.

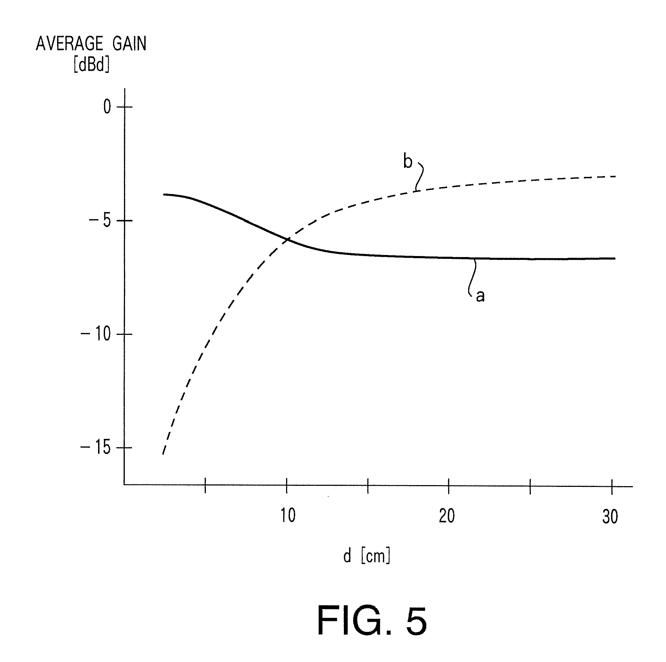

The antenna operation of mobile telephone apparatus 100 configured as described above will be described using FIG.4 and FIG.5. FIG.4 shows a state where the user is holding the mobile telephone apparatus according to Embodiment 1 of the present invention in his/her hand, and is viewing television broadcasting.

As shown in FIG.4, when user 300 is holding mobile telephone apparatus 100 in his/her hand in front of his/her face and is viewing television broadcasting using earphone 107 with display section 115 faced to his/her face, earphone 107 is inserted into an ear of user 300 and earphone cable 108 is hung from the ear of user 300 to mobile telephone apparatus 100.

In this state, loop element 104 is located in front of the human body--+X direction side--, and high antenna gain for a horizontally-polarized wave is obtained in the front direction of the human body.

Moreover, earphone cable 108 is hung almost vertically--in the Z axis direction--, and therefore external ground conductor 116 in earphone cable 108 operates substantially as a vertically-polarized wave antenna.

In this way, when television broadcasting is viewed, loop element 104 and earphone cable 108 operate as two antennas with different polarization characteristics, that is, a horizontally-polarized wave antenna and a vertically-polarized wave antenna. Therefore, in mobile telephone apparatus 100, by selecting between the demodulated signals obtained by these two antennas using demodulated signal selection circuit 113, it is possible to obtain the effect of the polarization diversity.

When user 300 views television broadcasting using a loudspeaker of mobile telephone apparatus 100 without using earphone 107, helical element 111 arranged in upper case 101 is selected instead of earphone cable 108. Therefore, in this case, it is possible to obtain the effect of the polarization diversity of helical element 111 and loop element 104.

In general, in a multiple wave propagation environment such as urban areas where a lot of reflectors exist, it is possible to obtain the diversity effect of about 5 dB to 10 dB using the above-described polarization diversity operation.

FIG.5 is a graph showing average gain of each antenna in the mobile telephone apparatus according to Embodiment 1 of the present invention, specifically, showing the change in the average gain in the horizontal plane (X-Y plane) of loop element 104 and earphone cable 108 when television broadcasting is viewed as shown in FIG.4.

In FIG.5, distance d between the surface of the face of user 300 and display section 115 of mobile telephone apparatus 100 (see FIG.4) is on the horizontal axis, and the average gain in the horizontal plane (X-Y plane) for the case where distance d changes is on the vertical axis.

In FIG.5, reference symbol a represents the average gain of loop element 104, and reference symbol b represents the average gain of the earphone cable antenna. As shown in FIG.5, when distance d is in the range of more than about 10 cm, the average gain of the earphone cable antenna is larger than that of loop element 104. On the other hand, when distance d is in the range of less than about 10 cm, the average gain of the earphone cable antenna is smaller than that of loop element 104.

The reason why such a phenomenon occurs is that loop element 104 operates as a magnetic-field-mode antenna, and earphone cable 108 operates as an electric-field-mode antenna, and thereby the influences affected from the human body of user 300 to the antenna operation are different.

Within the range where distance d from the human body is less than about 0.2 wavelengths, in loop element 104 that operates as a magnetic-field-mode antenna, the human body acts as a reflector, and the radiation resistance increases due to the electromagnetic interaction with the human body, and therefore the radiationefficiencyimproves. As a result, loop element 104 that operates as a magnetic-field-mode antenna provides the effect of the human body in which the gain increases near the human body.

On the other hand, earphone cable 108 that operates as an electric-field-mode antenna achieves high radiation efficiency when distance d from the human body is more than about 0.2 wavelengths, but, when earphone cable 108 is close to the human body, the radiation resistance decreases due to the electromagnetic interaction with the human body, and therefore the radiation efficiency rapidly deteriorates.

Accordingly, mobile telephone apparatus 100 selects the one with the higher reception level out of loop element 104 and earphone cable 108. As a result, when television broadcasting is viewed, mobile telephone apparatus 100 can always obtain high receiving sensitivity in the both cases where the antenna is close to the human body and where the antenna is away from the human body. In this way, compared to a case where only one of a magnetic-field-mode antenna and an electric-field-mode antenna is used, mobile telephone apparatus 100 can provide the switching effect for the influence of the human body of about 3 dB to 10 dB.

Of course, such a switching effect for the influence of the human body also provides an effect of further improving the above-described polarization diversity effect.

When earphone 107 is not used, helical element 111 is selected instead of earphone cable 108. Helical element 111 operates as an electric-field-mode antenna, so that it is possible to similarly obtain the above-described switching effect for the influence of the human body. However, the performance of helical element 111 is slightly lower than that of earphone cable 108, so that, when distance d from the human body is more than about 0.2 wavelengths, the gain of helical element 111 is lower by about 2 dB than that of earphone cable 108.

Accordingly, it is preferable that earphone cable 108 is preferentially selected as an antenna when earphone 107 is connected. Mobile telephone apparatus 100 implements a function of preferentially selecting earphone cable 108 as an antenna through switching operation by spring connection terminal 122 and antenna connection terminal 121 in earphone connector 109.

On the other hand, when earphone 107 is not connected, helical element 111 is selected as an antenna. Helical element 111 has slightly inferior performance compared to earphone cable 108, but, when, in particular, distance d from the human body is more than about 0.2 wavelengths, it is possible to obtain somewhat higher performance than loop element 104, and further obtain the effect of the polarization diversity.

As described above, with mobile telephone apparatus 100 according to Embodiment 1 of the present invention, it is possible to always obtain the diversity effect of the electric-field-mode antenna and the magnetic-field-mode antenna, regardless of whether or not earphone 107 is used.

In addition, when mobile telephone apparatus 100 is turned on, or the television receiving function is activated, it is often the case that distance d between mobile telephone apparatus 100 and the human body is more than about 0.2 wavelengths.

Therefore, in mobile telephone apparatus 100, by selecting the electric-field-mode antenna--the broadcast receiving circuit 110 side--as initial selection when the power is turned on or the function is activated, it is possible to obtain high receiving sensitivity as an initial value.

If helical element 111 does not exist, it is not possible to set the earphone cable 108 side which may not be connected, as an initial value. In contrast, in mobile telephone apparatus 100 according to Embodiment 1, helical element 111 is provided as a supplementary antenna of earphone cable 108, so that it is possible to provide the advantage of always obtaining high receiving sensitivity at the initial state regardless of whether or not earphone cable 108 is connected.

In this embodiment, although earphone cable 108 is used as the detachable electric-field-mode antenna that is arranged outside mobile telephone apparatus 100 and has high gain, the electric-field-mode antenna is not limited to this, and other types of antenna, such as an extensible antenna that may be extended outside mobile telephone apparatus 100 and a detachable antenna, may be used as the electric-field-mode antenna.

Specifically, as an electric-field-mode antenna of mobile telephone apparatus 100, any antenna may be used, providing that an antenna is detachable and, when attached, operates as a supplementary electric-field-mode antenna (secondary electric field antenna) to the electric-field-mode antenna with high gain (main electric field antenna), and provides the above-described advantage through the diversity operation with a magnetic-field-mode antenna.

In mobile telephone apparatus 100, by setting the main electric-field-mode antenna or the secondary electric-field-mode antenna as the initial value (master-side antenna), it is possible to obtain high receiving sensitivity as the initial value.

In mobile telephone apparatus 100 according to Embodiment 1, although loop element 104 is built into upper case 101, loop element 104 may be located at any other position that will not be covered with a hand of user 300 in a usage state.

The magnetic-field-mode antenna is not limited to loop element 104, and any antenna that operates in the magnetic field mode, such as a slot element, may be used.

The arranging direction of loop element 104 is not limited to the above-described direction. For example, when a loop aperture is arranged parallel to the longitudinal direction of mobile telephone apparatus 100, the effect of polarization diversity decreases, but it is possible to obtain the switching effect for the influence of the human body.

The electric-field-mode antenna that is selected when earphone cable 108 is not connected is not limited to helical element 111, and, for example, a meander conductive element, a monopole element or a whip element may be arranged inside or outside the case.

In mobile telephone apparatus 100, one or all of the broadcast receiving antennas may be used also for an antenna for mobile telephone communication, for example, loop element 104 may be used also for a built-in antenna for mobile telephone communication.

In mobile telephone apparatus 100 according to Embodiment 1, although two broadcast receiving circuits 106 and 110 that respectively correspond to the electric-field-mode antenna and the magnetic-field-mode antenna are provided, even when a configuration is adopted where the two antennas are switched using a high frequency switch, and the signal is inputted to a single broadcast receiving circuit, it is possible to similarly obtain the above-described advantage.

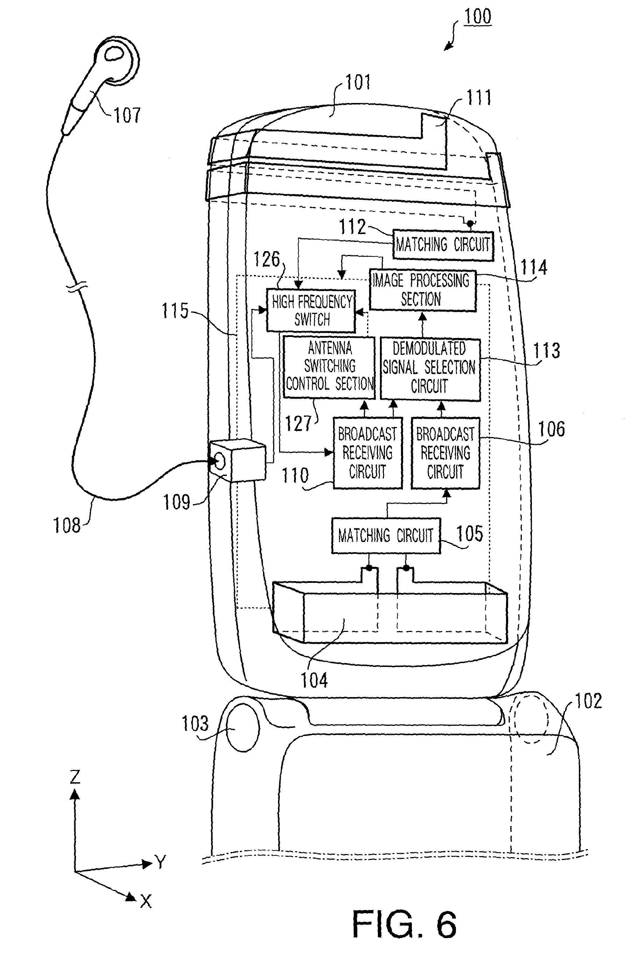

Meanwhile, although mobile telephone apparatus 100 is configured to switch between the earphone cable antenna and another electric-field-mode antenna using a mechanical switch in earphone connector 109 as shown in FIG.3, the antennas may be switched using high frequency switch 126 configured with a PIN diode or FET as shown in FIG.6.

In this way, if the antennas are switched using high frequency switch 126 configured with a high frequency switch circuit, antenna switching control section 127 may be used to detect the received signal strength at broadcast receiving circuit 110 and switch high frequency switch 126 according to the received signal level.

As a method for switching the above-described antennas, it is possible to adopt a configuration where antennas are switched through operation by user 300.

Moreover, although foldable type mobile telephone apparatus 100 has been described here, it is needless to say that the similar advantage can be obtained in a straight type mobile telephone apparatus that is not separated into upper case 101 and lower case 102.

By configuring the television broadcast receiving antenna using only balanced systems, it is possible to achieve high isolation with a communication antenna of mobile telephone apparatus 100, where an unbalanced antenna is dominantly used. In general, an antenna switching circuit of the balanced system tends to be complex, so it is desirable to provide two broadcast receiving circuits that respectively correspond to the electric-field-mode antenna and the magnetic-field-mode antenna, and to configure input circuits for both the broadcast receiving circuits as a balanced system.

Although in the above description of mobile telephone apparatus 100 according to Embodiment 1, the earphone cable antenna and helical element 111 are switched, when power combining or power-dividing feeding of the earphone cable antenna and helical element 111 is carried out using a power divider or a directional coupler, it is possible to obtain the above-described essential effect though the effect slightly decreases.

Moreover, in mobile telephone apparatus 100 according to Embodiment 1, even when power combining or power-dividing feeding is carried out not only for earphone cable 108 and helical element 111, but for part or all of the provided plurality of antenna elements, it is possible to obtain a fixed effect.

### (Embodiment 2)

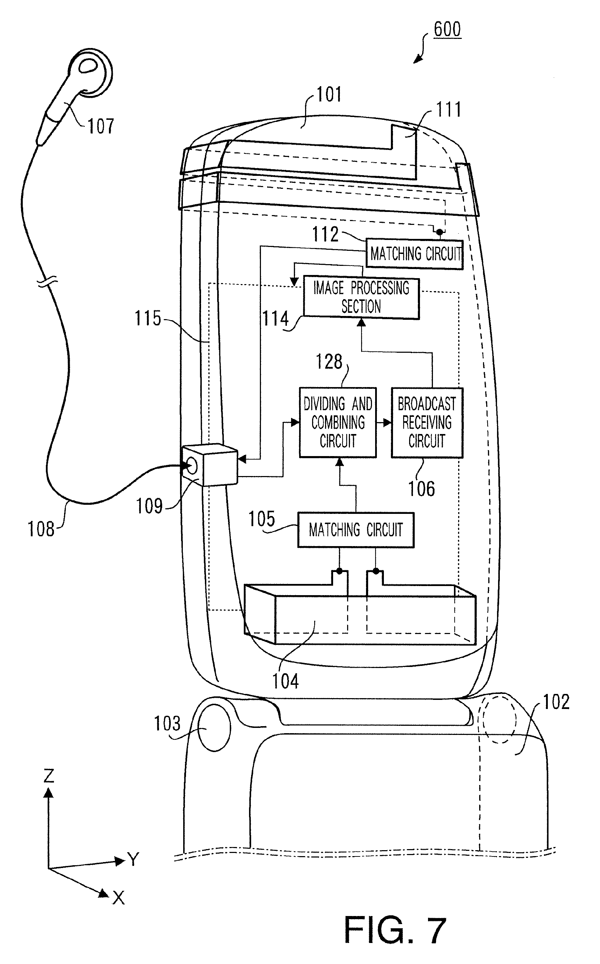

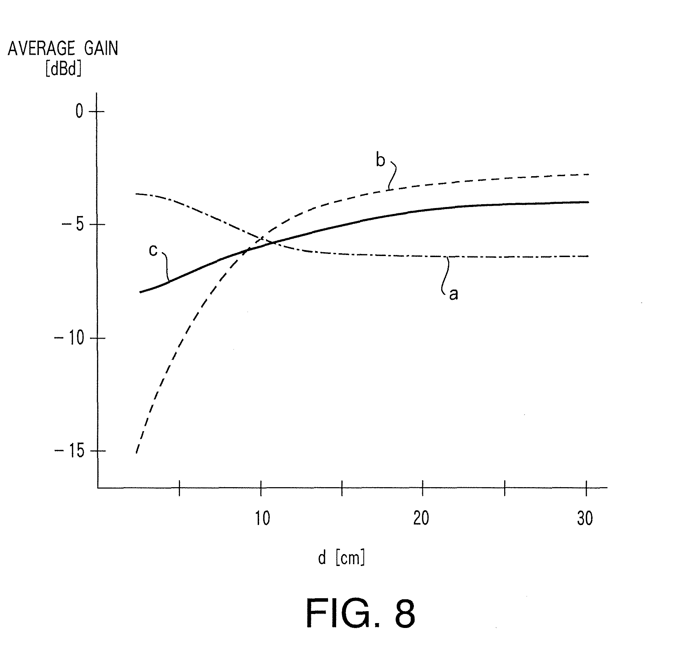

Next, the mobile telephone apparatus according to Embodiment 2 of the present invention will be described with reference to FIG.7 and FIG.8. FIG.7 is a schematic perspective view showing a basic configuration of the mobile telephone apparatus according to Embodiment 2 of the present invention. In FIG.7, components that are identical with ones in FIG.2 will be assigned the same reference numerals without further explanations.

As shown in FIG.7, loop element 104 of mobile telephone apparatus 600 according to Embodiment 2 is arranged near hinge part 103 of upper case 101 along the width direction (Y axis direction) of mobile telephone apparatus 600.

In FIG.7, loop element 104 operates as a built-in television broadcast receiving antenna. Loop element 104 achieves impedance matching by matching circuit 105 in the range from about 470 MHz to 700 MHz which is a television broadcasting frequency. The signal received from matching circuit 105 is inputted to dividing and combining circuit 128 as a signal combining section.

Earphone 107 is intended to be inserted into an ear of user 300 (see FIG.4) to allow the user to listen to sound of television broadcasting, and connected to earphone connector 109 through earphone cable 108. Earphone cable 108 transmits speech signals, and operates as an external antenna for receiving a television broadcasting wave.

The length of earphone cable 108 is, for example, about 50 cm to 100 cm. In the range of the television broadcast receiving band, the length of earphone cable 108 is about 0.8 wavelengths to 2.3 wavelengths.

Helical element 111 that operates as a built-in television broadcast receiving antenna is disposed at the top end of upper case 101 of mobile telephone apparatus 600. Helical element 111 is formed so that a conductive element is wrapped around the outer surface of upper case (case) 101 several times at the top end of upper case 101 with a predetermined element interval (for example, approximately 1 mm).

Helical element 111 configured in this way operates as a normal mode helical antenna, and the axis of the helical is positioned in the longitudinal direction, that is, the Z axis direction of the mobile telephone.

Total length of the conductive element configuring helical element 111 is set to about 0.25 (1/4) wavelengths to 0.625 (5/8) wavelengths at the television broadcast receiving band.

Helical element 111 achieves impedance matching by matching circuit 112 in the range from about 470 MHz to 700 MHz which is a television broadcasting frequency. The television broadcasting signal received by helical element 111 is inputted to dividing and combining circuit 128 via earphone connector 109.

Earphone connector 109 has a function of switching between the television broadcasting signal received by earphone cable 108 and the television broadcasting signal received by helical element 111, and inputting the signal to dividing and combining circuit 128.

Dividing and combining circuit 128 is configured with, for example, the Wilkinson circuit, and has a function of combining the television broadcasting signals from earphone connector 109 and matching circuit 105 at the same amplitude and the same phase.

The television broadcasting signal combined at dividing and combining circuit 128 is inputted to broadcast receiving circuit 106 and demodulated to a digital signal. The digital signal demodulated at broadcast receiving circuit 106 is subjected to image processing by image processing section 114 and displayed on display section 115.

FIG.8 is a graph showing average gain of each antenna in the mobile telephone apparatus according to Embodiment 2, that is, the change in the average gain in the horizontal plane (X-Y plane) for the case where the television broadcasting signals received at loop element 104 and earphone cable 108 are combined when television broadcasting is viewed as shown in FIG.4.

In FIG.8, distance d between the surface of the face of user 300 and display section 115 of mobile telephone apparatus 600 (see FIG.4) is on the horizontal axis, and the average gain in the horizontal plane (X-Y plane) for the case where distance d changes is on the vertical axis .

In FIG. 8, reference symbol a indicates the average gain of loop element 104, reference symbol b indicates the average gain of the earphone cable antenna, and reference symbol c indicates the average gain for the case where loop element 104 and the earphone cable antenna are divided and combined.

In mobile telephone apparatus 600, the signals from the different types of antennas--the electric-field-mode antenna and the magnetic-field-mode antenna--are combined, so that mobile telephone apparatus 600 has the characteristics having advantages of both modes.

Specifically, in FIG.8, inearphone cable 108 that operates as the electric-field-mode antenna, when the cable is close to the human body, radiation resistance decreases due to electromagnetic interaction with the human body, and therefore radiation efficiency rapidly deteriorates.

On the other hand, when signals from different types of antennas--the electric-field-mode antenna and the magnetic-field-mode antenna--are combined, the deterioration when the cable is close to the human body decreases through the operation of the magnetic-field-mode antenna. Therefore, in mobile telephone apparatus 600, it is possible to obtain the effect of improvement for the influence of the human body by about 5 dB compared to earphone cable 108 that operates as the electric-field-mode antenna.

Moreover, when distance d from the human body is more than about 0.2 wavelengths, loop element 104 that operates as the magnetic-field-mode antenna cannot obtain electromagnetic interaction with the human body, and therefore the gain is lower than in the state where the element is close to the human body.

On the other hand, when signals from different types of antennas are combined, and distance d from the human body is more than 0.2 wavelength, it is possible to obtain the effect of improvement by about 2 dB compared to loop element 104 that operates as the magnetic-field-mode antenna.

In this way, by dividing and combining the electric-field-mode antenna and the magnetic-field-mode antenna, it is possible to always obtain high receiving sensitivity in both cases where the apparatus is close to the human body and where the apparatus is away from the human body.

Although the configuration has been described in which the electric-field-mode antenna and the magnetic-field-mode antenna are divided and combined, it is also possible to obtain a fixed effect with the configuration in which earphone cable 108 and helical element 111 which are electric-field-mode antennas, are divided and combined.

In addition, in mobile telephone apparatus 600 according to Embodiment 2, even when power combining and dividing are carried out not only for earphone cable 108 and helical element 111, but for part or all of the provided plurality of antenna elements, it is possible to obtain a fixed effect.

In addition, dividing and combining circuit 128 is not limited to a dividing and combining circuit configured with the Wilkinson circuit, and a circuit that combines high frequency signals, such as a directional coupler is also possible.

As a method for combining signals from a plurality of antennas, it is possible to obtain the similar advantage using a method of providing a plurality of receivers and combining signals in a reception high-frequency circuit, or a method of combining signals in a demodulation baseband processing section.

If mobile telephone apparatus 600 according to Embodiment 2 operates so that the amplitude ratio or the phase of signals to be combined changes according to various usage states, it is possible to achieve the higher effect of improvement.

The present application is based on Japanese PatentApplicationNo.2004-217673, filed on July 26, 2004, the entire content of which is incorporated herein by reference.

### Industrial Applicability

The mobile telephone apparatus according to the present invention can always achieve high antenna performance when television broadcasting is viewed, regardless of the use of an earphone, or regardless of the position or direction where the mobile telephone is positioned near a human body, in both cases where the mobile telephone is close to the human body and where the mobile telephone is away from the human body, and therefore is suitable for use as a mobile telephone apparatus that can improve the receiving performance.

## Claims

1. A mobile telephone apparatus, comprising:
a broadcast-receiving section that receives broadcasting;
a first electric-field-mode antenna element that is detachable to a body of the mobile telephone apparatus;
a second electric-field-mode antenna element that is disposed on the mobile telephone apparatus;
a magnetic-field-mode antenna element; and
an antenna switching section that selectively switches between the antenna elements.

2. The mobile telephone apparatus according to claim 1, comprising an antenna element selection section that selects either the first electric-field-mode antenna element or the second electric-field-mode antenna element,
wherein either the first electric-field-mode antenna element or the second electric-field-mode antenna element and the magnetic-field-mode antenna element perform diversity reception operation.

3. The mobile telephone apparatus according to claim 1, wherein the second electric-f ield-mode antenna element is selected when the first electric-field-mode antenna element is not used.

4. The mobile telephone apparatus according to claim 1, wherein an earphone cable of an earphone is used as the first electric-field-mode antenna element.

5. The mobile telephone apparatus according to claim 1, wherein a helical element disposed on the body of the mobile telephone apparatus is used as the second electric-field-mode antenna element.

6. The mobile telephone apparatus according to claim 1, wherein a loop element disposed on the body of the mobile telephone apparatus is used as the magnetic-field-mode antenna element.

7. The mobile telephone apparatus according to claim 1, further comprising:
a first broadcast-receiving circuit that corresponds to the electric-field-mode antenna element;
a second broadcast-receiving circuit that corresponds to the magnetic-field-mode antenna element;
a signal selection section that selects a demodulated signal having a higher quality between a demodulated signal outputted from the first broadcast-receiving circuit and the second broadcast-receiving circuit.

8. The mobile telephone apparatus according to claim 1, wherein the plurality of antenna elements and input circuits of the broadcast-receiving circuit are connected with a balanced circuit.

9. The mobile telephone apparatus according to claim 1, wherein the magnetic-field-mode antenna element and an input circuit of the second broadcast-receiving circuit are connected with a balanced circuit.
